# EUROPEAN PATENT APPLICATION

(11) **EP 1 371 343 A1**
(43) Date of publication of application: **17.12.2003**
(21) Application number: 03008535.1
(22) Date of filing: 12.04.2003
(51) Int. Cl.: A61C 9/00

(54) **Dental pin and bushing assembly with snap detent**

(30) Priority: 13.06.2002 US 170981
(71) Applicant: Coltene/Whaledent, Inc., Mahwah, New Jersey 07430 (US)
(72) Inventor: Campanello, John E., Mahwah, New Jersey 07430 (US)
(74) Representative: Grättinger & Partner (GbR)

(57) **Abstract**

A dental pin and bushing assembly for coupling of a removable die of a tooth to a working cast. The pin includes an axially extending head that can be secured in the die. The bushing is secured in the working cast, and includes an elongated sleeve with an interior shape for receiving the pin. A collar depends from the head of the pin for positionally locating the pin in a recess in the elongated sleeve. A body of the pin depends from the collar, and is co-axial with the head portion. An interior annular ring in the elongated sleeve mates with an annular groove of the pin when the collar portion is fully seated in the recess. The geometries of the annular ring and groove are such that the interior annular ring snaps into the annular groove, and thereby provides tactile feedback to the dental technician signaling that the pin is fully seated in the bushing.

## Description

### FIELD OF THE INVENTION

This invention relates to a dental pin and bushing assembly for coupling removable dies of prepared teeth to working casts.

### BACKGROUND OF THE INVENTION

In dental restorations, the dentist prepares a candidate tooth by removing diseased portions and other portions that are required to be removed in order to mount a replacement structure on the tooth. After preparing the tooth in this manner, the dentist typically prepares a negative or impression of the tooth to be restored and of adjoining teeth, and sends this impression to a technician in a dental laboratory to be used as a mold for producing a working cast or model.

Using any one of a variety of known techniques, models can be constructed in which dies of the individual teeth may be removably positioned. Typically, dowel pins are used to removably couple the dies to the working cast. A removed die, for example, may be advantageously repositioned in a specialized vise to facilitate detailed work on an associated tooth replacement structure.

After the dies have been properly formed and indexed in the cast, it is important that each die may be repeatedly removed from and returned to its exact position in the cast. In addition, the dies must remain stable when positioned in the cast, even when the cast is inverted.

U.S. Patent No. 3,704,519, issued to Lystager on December 5,1972 describes the PINDEX system, a pin and bushing assembly system commercially available from Colténe/Whaledent Inc. In this system, holes are formed in a removable part of the die. Pins are then fixedly inserted into the removable part, and bushings are placed on ends of the pins extending from the removable part. The extended pin/bushing portions are then pressed downwardly into a casting material that forms a base portion of the working cast. The cast material sets with the bushings in place, after which the dies may be removed by extracting the pins from the bushings. The system employs two pins per removable part in order to ensure proper positioning of the die upon replacement.

Another dental pin and bushing assembly system is disclosed in U.S. Patent No. 4,801,264, issued to Weissman on January 31, 1989, and which is hereby incorporated by reference. In the system of Weissman, the dental pin includes an offset section, which mates with a corresponding offset section of the bushing. Using this feature, a removable die may be reliably and properly repositioned in the cast by means of s single pin and bushing assembly.

A number of dental pin and bushing systems, including the system of Weissman, employ a tapered pin together with a correspondingly tapered mating chamber in the bushing so that the pin may be easily inserted into the bushing, and then firmly located as the tapered pin and bushing surfaces meet. It would be advantageous if the pin and bushing system was further able to provide a recognizable tactile response when the inserted die reaches its appropriate position. It would also be advantageous if the pin and bushing system was able to indicate a secondary pin and die position, for example, to allow the temporary positioning of adjacent teeth at a slightly extended height to serve as a restoration material thickness gauge for the dental technician.

### SUMMARY OF THE INVENTION

In accordance with the present invention, a novel dental pin and bushing system comprises a pin having an axially extending head for secured retention in a die of a tooth, an enlarged collar depending from the head and having a radially-projecting key and a lower face, and a body portion depending from the lower face including a cylindrical rod co-axially positioned with respect to the head. The cylindrical rod further includes an annular groove near a distal end of the rod. The body of the pin is matingly received by an axially-directed sleeve in the bushing. The sleeve includes a recess and keyway for receiving the enlarged collar and key in a single positional orientation, and a cavity depending at a proximal end from a seat of the recess. At a distal end, the cavity includes an inwardly directed annular ring for mating with the annular groove of the pin.

When the body of the pin is inserted into the sleeve, the annular ring of the bushing snaps into the annular groove of the pin as the lower face of the collar mates with the seat of the recess. In this manner, a tactile response is imparted to the die of the tooth and to the working cast to indicate to a technician that the die of the tooth is fully seated.

In a second aspect of the invention, the enlarged collar and recess interfere when the lower surface of the enlarged collar reaches an upper surface of the bushing at an opening to the recess. As a result, a frictional force is generated that resists further engagement and allows the dental technician to temporarily rest the die of the tooth at this position. This positioning may be of benefit, for example, to provide a material gauge for an adjacent tooth. The die may subsequently be pushed downward until the snap response is felt, indicating that it has reached its fully seated position.

### BRIEF DESCRIPTION OF THE DRAWINGS

A more complete understanding of the invention may be obtained by reading the following description of specific illustrative embodiments of the invention in conjunction with the appended drawing in which:
FIGS. 1 - 4 provide isometric views of a dental pin according to the present invention;
FIG. 5 provides a perspective view of the dental pin of FIGs. 1 - 4;
FIGs. 6 - 9 provide isometric views of a dental bushing according to the present invention;
FIG. 10 provides a perspective view of the dental bushing of FIGs. 6 - 9;
FIGs. 11A, 11B provide cross sectional views of the inventive pin and bushing of FIGS. 1 - 10 that demonstrate positioning the pin at elevated and seated positions in the bushing;
FIGs. 11C, 11D illustrate features of a tooth die for receiving the inventive pin of FIGS. 1- 4;
FIG. 12 provides a perspective view of a working cast with removable dies using the inventive pin and bushing of FIGs. 1 - 10; and
FIGs. 13, 14 provide perspective views of the working cast partially broken away to illustrate operation of the inventive pin and bushing of FIGS. 1 - 10.

In the various figures, like reference numerals wherever possible designate like or similar elements of the invention.

### DETAILED DESCRIPTION OF THE PREFERRED EMBODIMENTS

The following detailed description includes a description of the best mode or modes of the invention presently contemplated. Such description is not intended to be understood in a limiting sense, but to be an example of the invention presented solely for illustration thereof, and by reference to which in connection with the following description and the accompanying drawing one skilled in the art may be advised of the advantages and construction of the invention.

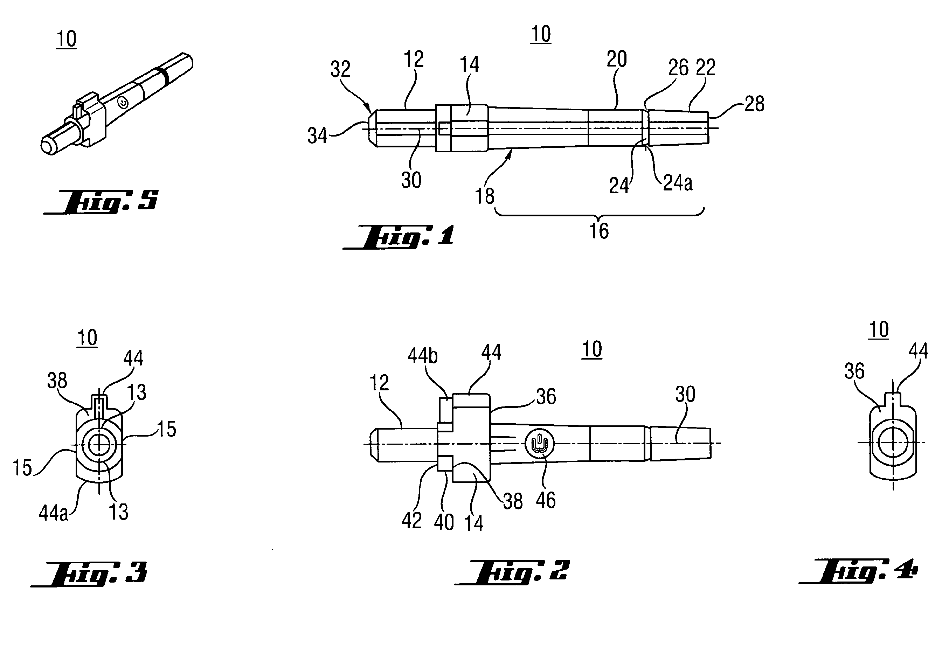

FIG. 1 provides a top view of a pin 10 associated with the present invention. The pin 10 includes an axially-extending head 12 for insertion into a die of a tooth, an enlarged collar 14 depending from head 12, and a body 16 depending from enlarged collar 14 and co-axially positioned with respect to head 12. In a preferred embodiment of the present invention, enlarged collar 14 is defined to have a substantially rectangular shape. It should be noted that many other shapes are also possible for enlarged collar 14, and are fully contemplated by the present invention.

In the preferred embodiment, body 16 comprises a cylindrical rod including a tapered segment 18, an intermediate segment 20, and a foot segment 22. Intermediate segment 20 and foot segment 22 are separated by annular groove 24. Foot segment 22 may optionally be tapered toward endface 28. At annular groove 24, the diameter of foot segment 22 may also be smaller, for example, than the diameter of intermediate segment 20 at annular groove 24.

Annular groove 24 may be defined by a variety of shapes and geometrics, which are fully contemplated by the present invention. In a preferred embodiment, groove 24 is defined by tapered groove surface 24a and ledge 26. Tapered groove surface 24a comprises an annular cone sharing a large diameter at one end with a distal end of intermediate segment 20 and a small diameter at the other end which terminates upon ledge 26. Ledge 26 is substantially perpendicular to a longitudinal axis 30 of pin 10, and defines a proximal end of foot segment 22.

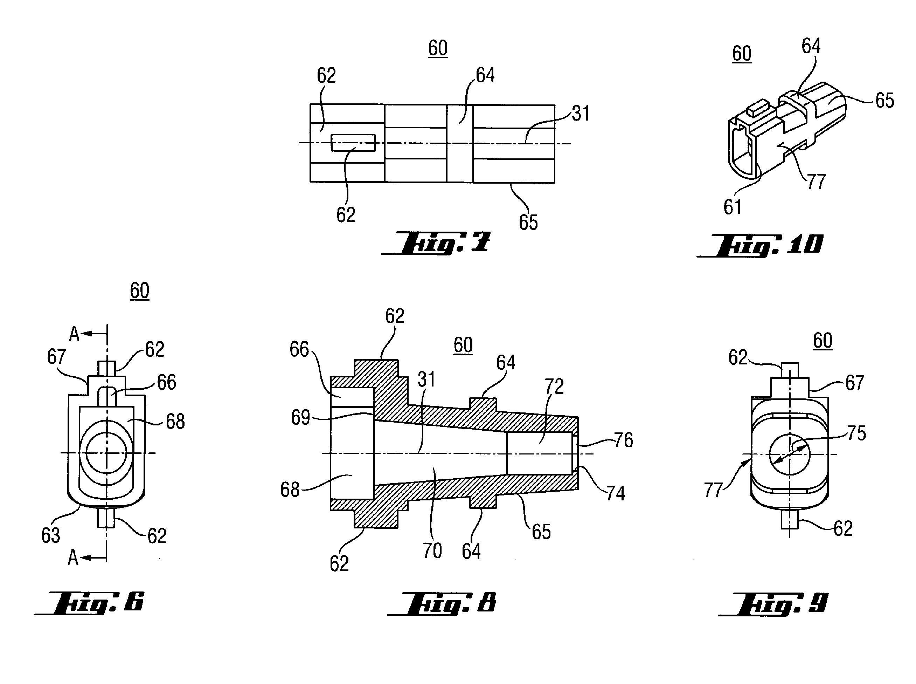

FIG. 2 provides a side view of pin 10. As shown in FIG. 2, enlarged collar 14 further includes bottom surface 36, top surface 38, and lateral key 44. In a preferred embodiment of the present invention illustrated in FIGs. 3 and 4, enlarged collar 14 has a substantially rectangular cross-section, and lateral key 44 has a substantially square cross-section. Key surface 44a, at an opposing end of enlarged collar 14 with relation to lateral key 44, is defined by a circular radius. Optionally, identifier 46 may be embossed on tapered segment 18, collar 14, or any other suitably large surface of pin 10.

Annular collar 40 is interposed between head 12 and top surface 38 of enlarged collar 14, and includes collar surface 42. As will be further described with reference to FIGs. 11C and 11D, head 12 and annular collar 40 provide surfaces which may be matably affixed to a tooth die in the working cast (not shown). Optionally, and as shown in FIG. 2, anti-rotation key 44b extends on a peripheral surface of annular collar 40 and on a shared axis with lateral key 44 from top surface 38 toward collar surface 42. As will be further described with reference to FIGs. 11C and 11D, optional anti-rotation key 44b provides additional surfaces to be affixed to mating slot surfaces in a tooth die in a manner that prevents rotation of pin 10 within the die.

As shown in FIG. 2, head 12 may include chamfer 32 at top face 34. As illustrated in FIG. 3, head 12 may also include flat surfaces 13 on opposing top and bottom portions of its perimeter, and annular collar 40 may include flat surfaces 15 on opposing side portions of its perimeter.

Head 12 and annular collar 40 are preferably glued in mating cavities in a tooth die, for example, using a conventional cyanoacrylate or other suitable glue. Cyanoacrylates and other suitable glues may tend to release gases as they cure. In an unvented cavity, these gases may expand and operate to push head 12 outwardly from the cavity before a suitable seal is made. As will be further described with reference to FIGs. 11C and 11D, in order to avoid such movement of head 12, flat surfaces 13 and 15 in conjunction with the cavities in which they are seated serve to provide passageways for venting the associated gases. In addition, flat surfaces 13 and 15 provide pockets within the respective cavities in which they are seated where glue may gather for more effective adhesion to the walls of the cavity and flat surfaces 13, 15.

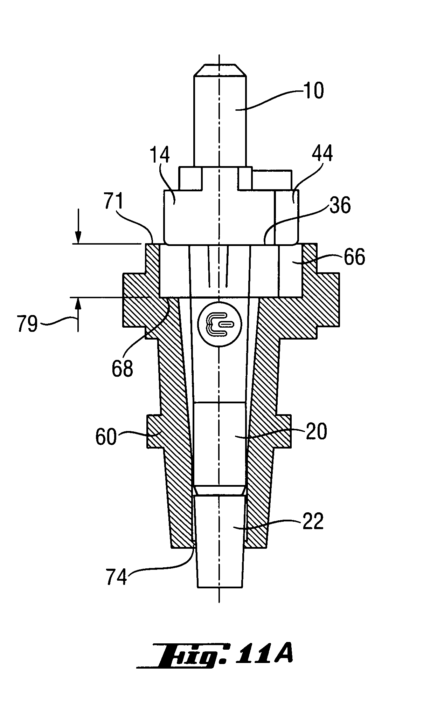

FIG. 5 provides a front right perspective view of the pin 10. Pin 10 may be constructed conventionally from a variety of suitable materials including, for example, a zinc alloy treated with a chromate finish. Features of enlarged collar 14 and body 16 introduced with reference to FIGs. 1 - 5 will be further described herein with reference to additional features of the present invention.

FIG. 6 provides a top end view of bushing 60. Bushing 60 includes a recess 68 for receiving enlarged collar 14 of pin 10, and a keyway 66 for receiving key 44 of pin 10. Bushing 60 is constructed of a suitable material (for example, Acetal copolymer resin, commercially available, for example, from DuPont Engineering Polymers, Wilmington, Delaware). Recess 68 has an interior shape that is substantially identical to a peripheral shape of enlarged collar 14. In this manner, enlarged collar 14 and key 44 may be received by recess 68 and keyway 66 in a singular positional orientation. Because bushing 60 comprises a flexible material, enlarged collar may be interferingly received by recess 68, as will be further described herein. It should be noted that the features of enlarged collar 14, key 44, recess 68 and keyway 66 define one of may peripheral shapes that may be used to locate pin 10 within bushing 60 in a singular positional orientation, all of which are fully contemplated within the scope of this invention.

As illustrated in FIG. 6, bushing 60 optionally includes lateral ribs 62, which extend from keyway enclosure 67 and recess enclosure lower edge 63. Ribs 62 provide additional lateral surface area for immovably retaining bushing 60 within the working cast.

FIG. 7 presents a top view of bushing 60 illustrating lateral rib 62 extending from keyway enclosure 67, and optional annular rib 64 extending from barrel 65. Annular rib 64 is also seen in FIG. 8, which provides a cross-section of bushing 60 through section A - A of FIG. 6. Annular rib 64 provides additional external surface area for immovably retaining bushing 60 within the working cast.

As shown in FIG. 8, top recess 68 is adjacent to entry cavity 70 at seat surface 69, and entry cavity 70 is adjacent to a proximal end of intermediate cavity 72. As shown in FIGs. 8 and 9, exit cavity 76 is defined by inner diameter 75 of inwardly directed annular ring 74 at a distal end of intermediate cavity 72. Cavities 70, 72 and aperture 76 are coaxially located along longitudinal axis 31. Entry cavity 70 may be optionally tapered, for example, to facilitate insertion of pin 10 into the bushing 60 and to reduce the amount of material required to fashion bushing 60. Entry cavity 70 and intermediate cavity 72 are fashioned to permit free passage of pin body 16. Annular ring 74 is formed to be retained in the annular groove of pin 10.

FIG. 10 provides a right front perspective view of bushing 60. As shown in FIG. 10, a surface defined by recess enclosure side edge 61 may be extended along rib 64 and barrel 65 in order to provide a flat surface 77 on each side of bushing 60 for immovably retaining bushing 60 within the working cast.

FIGs. 11A, B provide a cross sectional views of bushing 60 as in FIG. 8 with pin 10 of FIG. 2 respectively placed in each of two seated positions in bushing 60. As shown in FIG. 11A, pin 10 is partially inserted into bushing 60, at a position where bottom surface 36 of enlarged collar 14 meets upper bushing surface 71, and in which key 44 is properly aligned with keyway 66. Before reaching this position, pin 10 passes freely through bushing 60. At this position, however, enlarged collar 14 begins to interfere with recess 68, and generates a frictional force resisting further insertion of pin 10. Accordingly, pin 10 may rest in this position at a height 79 above its fully seated position until additional force is applied to pin 10 to overcome the frictional force. This elevated positioning of pin 10 at height 79 above its fully seated position may be useful, for example, to the dental technician for use of the associated elevated tooth die as a gauge for establishing a desired replacement structure material thickness in an adjacent tooth die.

FIG 11B illustrates the pin 10 and bushing 60 of FIG. 11A after the pin has been forced into a fully seated position. In FIG. 11B, additional downward force has been applied to pin 10 to cause bottom surface 36 to rest against seat surface 69. In this position, the annular groove 24 in pin 10 has moved to a position laterally adjacent to internal annular ring 74. As ledge 26 moves past endface 80 of bushing 60, internal annular ring 74 snaps into annular groove 24. The action of annular ring 74 snapping into the annular groove 24 causes a tactile impulse to be transmitted back through pin 10 and through the associated tooth die. Accordingly, the dental technician is actively signaled that the die has been fully seated.

FIGs. 11C, 11D illustrate how pin 10 may be matably affixed to a tooth die 110. As illustrated in FIG. 11C, head 12 of pin 10 is inserted into an aperture 117 in tooth die 110. Aperture 117 has an inner diameter approximately equivalent to an outer diameter of head 12, thereby holding inserted head 12 in an approximately fixed position. As shown in FIG. 11C, the diameter of head 12 may be reduced at flat surfaces 13 of head 12, thereby creating passageways 119 between pin 12 and aperture 117. As earlier described with reference to FIG. 2, passageways 119 provide a means for venting gases that may be released by glue positioned in an upper cavity 120 defined by top face 34 of head 12 and distal end of aperture 117. As also described with reference to FIG. 2, passageways 119 provide additional cavities for accumulating glue in order to affix head 12 within aperture 117.

As shown in FIG. 11D, aperture 118 is coaxial to aperture 117, has a larger diameter than aperture 117, and terminates at a seat 118a coplanarly positioned with respect to a proximal end of aperture 117. Aperture 118 also terminates in opposition to seat 118a at lower die surface 115, and has an inner diameter approximately equivalent to an outer diameter of annular collar 40, thereby holding inserted annular collar 40 in an approximately fixed position. The circumference of aperture 118 is at least partially confined inside a a periphery defined by top surface 38 of enlarged collar 14, so that when pin 10 is inserted into tooth die 110, top surface 38 is retainably positioned against lower die surface 115. As shown in FIG. 3, annular collar 40 may also include flat surfaces 15 to define passageways within aperture 118 for venting glue gases and for accumulating glue.

Tooth die 110 may also include slot 116 (as illustrated in FIGs. 11C, 11D) laterally relieving aperture 118 across and beyond a diameter of aperture 118. Slot 116 may typically be produced, for example, by means of a conventional tooth die separating disk, and provides a cavity for fixably locating anti-rotation key 44b of FIG. 11C. Slot 116 limits the orientation of pin 10 to tooth die 110 to two radial positions, and upon receiving anti-rotation key 44b, prevents rotation of pin 10 with respect to tooth die 110. One skilled in the art may easily devise a variety of geometries for one or more anti-rotation keys 44b associated with head 12 and/or annular collar 40 and one of more slots 116 associated with tooth die 110, all of which are contemplated within the scope of the present invention.

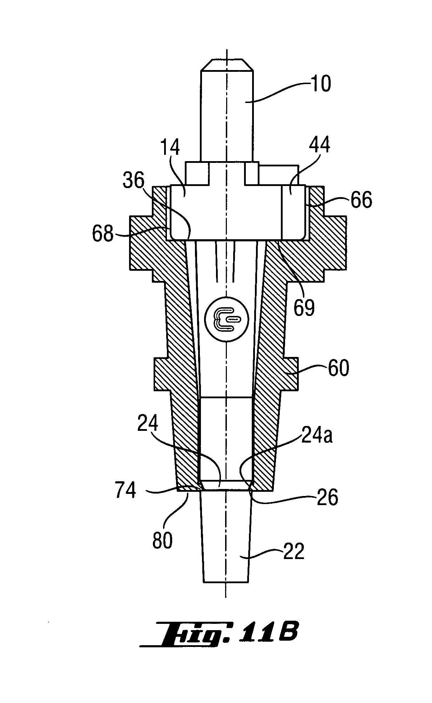

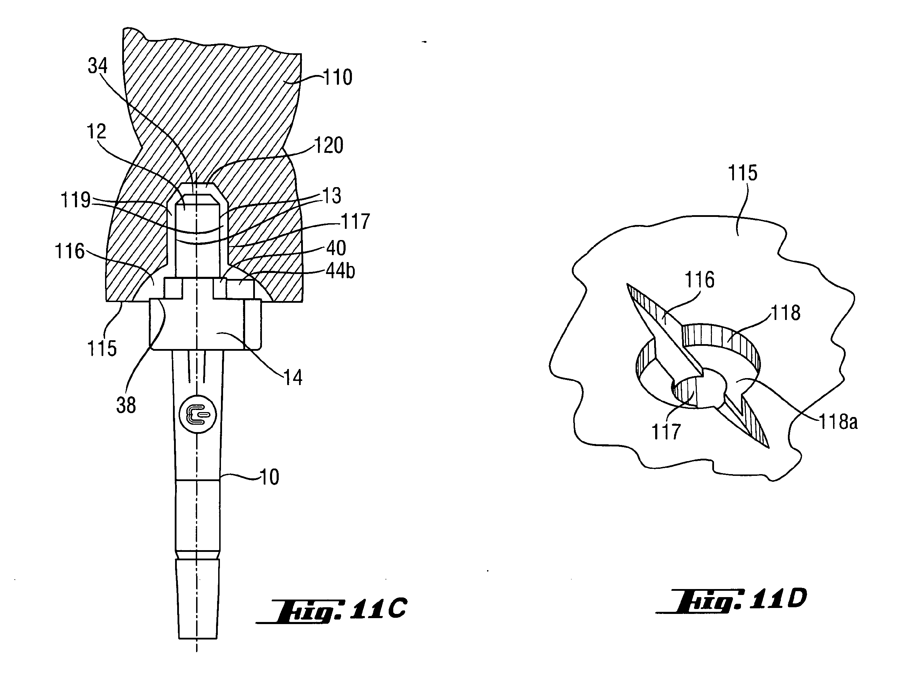

FIGs. 12 - 14 illustrate operation of the present invention in a working cast 100. In FIGs. 12 - 14, working cast 100 includes a base portion 102 and an upper die portion 104. Upper die portion 104 is sectioned by conventional means to produce removable dies 106, 108 and 110. In FIG. 12, die 110 is shown in a removed state, with enlarged collar 14 and body 16 of pin 10 extending from die 110.

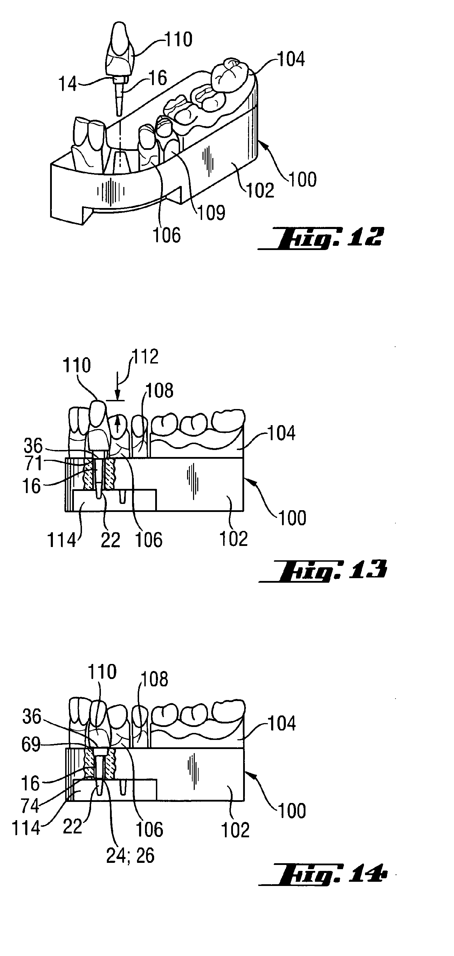

In FIG. 13, consistent with the illustration of FIG. 11A, body portion 16 of pin 10 has been inserted into bushing 60 so that bottom surface 36 rests on upper surface 71 of bushing 60. End segment 22 of pin 10 protrudes a short distance through bushing 60, such that a screwdriver or other similar implement may be inserted into recess 114 of base 102 in order to press upwards on pin 10 to release die 110 and pin 10 from bushing 60. Alternatively, die 110 can be pulled directly out of bushing 60.

FIG. 14 shows die 110 fully inserted into base 102. Here, consistent with the illustration of FIG. 11B, bottom face 36 of rectangular collar 14 sits directly on seat surface 69, and interior annular ring 74 of bushing 60 is snapped into the annular groove 24 of pin 10. Die 110 may be removed by pulling die 110 out of base 102, or by inserting a screwdriver or other similar instrument in recess 114 and pressing upwards on foot segment 22.

While the present invention has been described at some length and with some particularity with respect to the several described embodiments, it is not intended that it should be limited to any such particulars or embodiments or any particular embodiment, but it is to be construed with references to the appended claims so as to provide the broadest possible interpretation of such claims in view of the prior art and, therefore, to effectively encompass the intended scope of the invention.

## Claims

1. A dental pin and bushing assembly for removably coupling a die of a tooth to a working cast, the system comprising:
a pin, the pin including:
an axially-extending head for secured retention in the die,
an enlarged collar depending from the head portion, the enlarged collar including a lower face, and
a body including a cylindrical rod attached to the enlarged collar at the lower face, the rod being coaxial with the head and including an annular groove, and
a bushing for securement of the pin within the working cast, the bushing comprising an axially-extending sleeve with an interior shape for matingly receiving the collar and body of the pin, the sleeve including:
a recess terminating in a seat, the recess for matingly receiving the enlarged collar in a single positional orientation,
a cavity depending from the seat, and
an annular ring, the annular ring being located on an interior surface of the cavity and matingly engaging the annular groove of the pin when the pin is positioned in the sleeve such that the lower face of the enlarged collar is in substantial proximity to the seat of the recess.

2. The assembly of claim 1, wherein engagement of the annular groove by the annular ring causes a tactile indication of engagement.

3. The assembly of claim 2, wherein the tactile indication is a snap fit.

4. The assembly of claim 1, wherein the head of the pin comprises a substantially cylindrical stem having one or more flattened surfaces on a perimeter of the stem.

5. The assembly of claim 4, wherein the pin further comprises an annular collar at a base of the head which is in communication with the enlarged collar.

6. The assembly of claim 5, wherein the annular collar is substantially cylindrical and has one or more flattened surfaces on a perimeter of the collar.

7. The assembly of claim 5, wherein the pin further comprises at least one anti-rotation key laterally extending from at least one of the perimeter of the collar and the perimeter of the stem.

8. The assembly of claim 6, wherein the at least one anti-rotation key comprises an anti-rotation key laterally extending from the perimeter of the collar.

9. The assembly of claim 1, wherein the cylindrical rod comprises a tapered segment downwardly tapered and depending at an upper end from the enlarged collar, an intermediate segment depending from a lower end of the tapered segment, and a foot segment meeting a lower end of the intermediate segment at the annular groove, each of the tapered, intermediate and foot segments being coaxially positioned.

10. The assembly of claim 9, wherein each of the tapered, intermediate and foot segments has a circular cross-section.

11. The assembly of claim 9, wherein the pin further includes an identification marking embossed on an outer surface of the tapered segment.

12. The assembly of claim 1, wherein the annular groove comprises an annular cone and a ledge, wherein the annular cone has a large diameter end coextensively terminating at a diameter of the cylindrical rod and a small diameter end terminating at the ledge.

13. The assembly of claim 12, wherein the ledge is substantially perpendicular with respect to a longitudinal axis of the cylindrical rod.

14. The assembly of claim 1, wherein the enlarged collar is substantially rectangular in shape.

15. The assembly of claim 14, wherein the enlarged collar portion further includes a key, the key radially projecting from a surface of the collar.

16. The assembly of claim 15, wherein the key has a square cross-section.

17. The assembly of claim 15, wherein a surface of the enlarged collar portion opposite the surface projecting the key is defined by a circular radius.

18. The assembly of claim 1, wherein the recess in the sleeve is substantially rectangular in shape.

19. The assembly of claim 18, wherein the sleeve further comprises a keyway radially projecting from a surface of the recess.

20. The assembly of claim 19, wherein the keyway has a square cross-section.

21. The assembly of claim 19, wherein a surface of the recess opposite the surface projecting the keyway is defined by a circular radius.

22. The assembly of claim 1, wherein at least one lateral rib projects from an outer surface of the bushing.

23. The assembly of claim 22, wherein two lateral ribs project from opposing outer surfaces of the bushing.

24. The assembly of claim 23, wherein the two lateral ribs are located at an upper end of the bushing in proximity to the recess of the sleeve.

25. The assembly of claim 1, wherein one or more annular ribs are formed on a perimeter of the bushing in proximity to the cavity.

26. The assembly of claim 25, wherein the perimeter of the bushing in proximity to the cavity is substantially rectangular in shape.

27. The assembly of claim 1, wherein the cavity further comprises a tapered segment downwardly tapered and depending from the seat, and an untapered segment depending from a lower end of the tapered portion and including the annular ring at a distal end, each of the tapered and untapered portions being coaxially positioned.

28. The assembly of claim 27, wherein each of the tapered and untapered segments has a circular cross-section.

29. The assembly of claim 1, wherein the pin comprises an inflexible material and the bushing comprises a flexible material.

30. The assembly of claim 29, wherein the pin comprises a zinc alloy.

31. The assembly of claim 30, wherein the pin has a chromate finish.

32. The assembly of claim 29, wherein the bushing comprises an acetal resin.

33. The assembly of claim 1, wherein portions of surfaces of the pin interfere with portions of surfaces of the sleeve when the pin is inserted at a position in the sleeve where the lower face of the enlarged collar is in substantial proximity to an uppermost surface of the bushing, thereby enabling the pin to rest at said position in the sleeve.

34. The assembly of claim 33, wherein said position of the pin with respect to the sleeve places the die of the tooth at a desired elevated working position in the working cast.

35. A dental pin to be used in an assembly for coupling a die of a tooth to a working cast, the dental pin comprising:
an axially-extending head for secured retention in the die,
an enlarged collar depending from the head portion, the enlarged collar including a lower face, and
a body including a cylindrical rod attached to the enlarged collar at the lower face, the rod being coaxial with the head and including an annular groove.

36. A bushing to be used in an assembly for coupling a die of a tooth to a working cast, the bushing comprising an axially-extending sleeve with an interior shape including:
a recess terminating in a seat;
a cavity depending from the seat, and
an annular ring, the annular ring being inwardly directed and located on an interior surface of the cavity.
